# EUROPEAN PATENT SPECIFICATION

(11) **EP 4 754 661 B1**
(45) Date of publication and mention of the grant of the patent: **04.11.2026**
(21) Application number: 24769183.5
(22) Date of filing: 23.08.2024
(51) Int. Cl.: G06F 21/55, G06F 21/75

(54) **FAULT-RESILIENT SECURE-BY-DESIGN SYSTEMS ELEMENTS**
FEHLERBESTÄNDIGE DESIGNSICHERE SYSTEMEELEMENTE
ÉLÉMENTS DE SYSTÈMES SÉCURISÉS DÉS LA CONCEPTION RÉSILIENTS AUX DÉFAILLANCES

(43) Date of publication of application: 10.06.2026
(73) Proprietor: Google LLC, Mountain View, CA 94043 (US)
(72) Inventor: SINHA, Rohit Kumar, Mountain View, California 94043 (US); JOSE, Edwin, Mountain View, California 94043 (US); DIRAVIYAM, Arun David Arul, Mountain View, California 94043 (US)
(74) Representative: Marks & Clerk GST
(86) International application number: PCT/US2024/043657
(87) International publication number: WO 2026/043497

(56) References cited:
- US-A1- 2021 081 529
- US-A1- 2021 312 092
- US-A1- 2023 036 117

## Description

### BACKGROUND

People increasingly rely upon computing devices to perform daily tasks in their work and in their personal lives. These tasks may include anything from gaining access to buildings secured by electronic locks, operating vehicles, and completing financial transactions. Unscrupulous individuals may seek to breach or "attack" the operation of a computing system to which they do not have legitimate access to gain access to the facilities or data of others to commit theft, disrupt services, or other improper reasons.

One set of techniques to improperly access a computing system are fault injection attacks. Generally speaking, a fault injection attack involves attacking one or more design elements (e.g., a central processing unit, system memory devices, communication devices, etc.) of a computing system to gain control of the computing system without disabling the entire computing system. If the attack disables the entire computing system, then the attacker will not be able to gain control of the computing system. However, if the attacker is able to interfere with the operation of one or more components, the attacker then may gain control of the computing system to improperly access data or perform other undesirable actions.

Fault injection attacks may be hardware-based. Hardware-based attacks may involve using lasers or by applying extreme electromagnetic, voltage, or temperature stimuli to one or more design elements on a die to induce a clock malfunction or to cause one or more other elements to malfunction. Alternatively, or additionally, fault injection attacks may be software-based. Whichever method is used, once a design element malfunctions, it may undermine the operation of that design element and others that interoperate with the breached element or elements, enabling the attacker to take control of the computing system.

For example, a fault injection attack inserted during secure boot flow of a computing system may result in the breach of a security-guarantee operation, such as by allowing malicious firmware to be executed by the computing system. Once the malicious firmware is executed, the attacker inserting the malicious firmware may have partial or complete control of the computing system and any data it can access. The fault injection attack may manipulate how the authenticity or validity of the firmware is verified and, thus, cause the computing system to boot using the malicious firmware. As a result, the attacker may exercise partial or complete control of the computing device and be able to access or destroy data or use the computing system to perform unauthorized or undesirable functions. Preventing attackers from breaching design elements that enable those individuals to take control of the computing system may avoid tremendous harm to those who depend on the computing system. Patent document US2021/312092 discloses relevant prior art.

### SUMMARY

This document describes apparatuses and techniques for fault-resilient secure-by-design systems elements. In aspects, a method is disclosed that includes operating a plurality of design elements in a computing system that are configured to operate with standard timing slack and at least one security-critical design element configured to operate with increased timing slack that is greater than the standard timing slack. The increased timing slack enables a security-guarantee operation to be successfully performed by the at least one security-critical design element before a fault injection attack directed at one or more of the plurality of design elements causes a fault in operation of one or more of the plurality of design elements that would have prevented the security-guarantee operation from being successfully completed if the at least one security-critical design element were configured to operate with standard timing slack.

This Summary is provided to introduce apparatuses and techniques for fault-resilient secure-by-design systems elements, which are further described below in the Detailed Description and illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of fault-resilient secure-by-design systems elements are described throughout the disclosure with reference to the Drawings. The use of the same reference numbers in different instances in the description and the figures indicate same or similar elements:
FIG. 1 illustrates an example computing system in which some of the design elements are designated as security-critical design elements configured to operate with increased timing slack to resist fault injection attacks;
FIGS. 2-1 and 2-2 illustrate a computing system in which a security-critical design element is configured to operate with increased timing slack to resist a test fault injection attack;
FIG. 3 is a timing diagram illustrating one or more security-critical design elements operating with increased timing slack relative to other design elements;
FIGS. 4-1 and 4-2 illustrate a block diagram of the security-critical design element of FIGS. 2-1 and 2-2 operating with standard timing slack and a timing diagram representing operation of the security-critical design element under normal conditions, respectively;
FIGS. 5-1 and 5-2 illustrate a block diagram of the security-critical design element of FIGS. 2-1 and 2-2 operating with standard timing slack and a timing diagram representing operation of the security-critical design element when subjected to a fault injection attack;
FIGS. 6-1 and 6-2 illustrate a block diagram of the security-critical design element of FIGS. 2-1 and 2-2 operating with increased timing slack and a timing diagram representing operation of the security-critical design element under normal conditions;
FIGS. 7-1 and 7-2 illustrate a block diagram of the security-critical design element of FIGS. 2-1 and 2-2 operating with standard timing slack and a timing diagram representing operation of the security-critical design element subjected to the test fault injection attack;
FIGS. 8 is a status diagram of a design element operating with standard timing slack subject to a fault injection attack;
FIGS. 9-1 and 9-2 are status diagrams of the design element of FIG. 8 operating with increased timing slack subject to the fault injection attack;
FIG. 10 is a block diagram of interoperative design elements to be evaluated to determine if they represent a chain of influence;
FIG. 11 is a status diagram of the interoperative design elements of FIG. 10 subjected to a fault injection attack with the second design element operating with standard timing slack;
FIGS. 12-1 and 12-2 are a status diagram of the interoperative design elements of FIG. 10 subjected to a fault injection attack with the second design element operating with increased timing slack:
FIG. 13 is a block diagram of the design elements of FIG. 10 recognized as being part of a chain of influence;
FIG. 14 is a block diagram of the design elements of FIGS. 10 and 13 and other design elements evaluated by a modeling tool to determine a scope of the chain of influence:
FIG. 15 is a flow diagram of a method of applying fault injection attacks to a device under test or a model thereof to identify design constraints determined from the effect of applying the fault injection attacks to one or more of the design elements of the device under test;
FIG. 16 illustrates an example system that includes design elements operating at with standard timing slack or increased timing slack to resist fault injection attacks;
FIG. 17 illustrates a block diagram of components of a computing system operable at different clock speeds to thwart fault injection attacks;
FIG. 18 illustrates a block diagram of a computing system used to determine which design elements included in a computing system should be determined to be security-critical design elements; and
FIG. 19 illustrates an example method of operating a computing system with design elements with standard timing slack or increased timing slack to resist fault injection attacks.

### DETAILED DESCRIPTION

Current computing system designs may be designed to prevent improper access to the computing system to disrupt its operation or to improperly access the computing system to access data stored therein. To prevent fault injection attacks, computing systems may include a network of sensors to monitor voltage, temperature, and other physi cal parameters that may signal an attempted hardware-based fault injection. Although these sensors may be effective, they necessarily complicate system development in the design and inclusion of these sensors and increase the cost of any computing system in which they are implemented. Computing systems also may include devices or operating code that are used to generate and check codes, such as by checking parity codes, performing cyclical record checks, and executing other processes in an attempt to ensure that corrupt code or data have not been injected into the computing system. These security measures are largely effective in most cases. However, these hardware and software measures add overhead to the operation of the computing system in continually checking these codes. Further, typical check codes generally can detect only a specified number of bit-flips and still may be vulnerable to a fault injection attack that involves a great number of bit-flips.

One way in which fault injection techniques may succeed is by leveraging the timing of events that occur within the computing system. For example, an attacker may seek to cause a computing system to execute malicious firmware instead of approved firmware. During secure boot flow, the central processing unit (CPU) may read some of the firmware into system memory where authentication is performed, such as by generating integrity bits that indicate whether the firmware is authentic and storing the integrity bits in system memory for verification by the CPU. A fault injection attack may seek to breach this process by attacking the memory bus to prevent the value of the integrity bits from being communicated to the CPU or to change the value of the integrity bits communicated to the CPU. If the attack is successful, the integrity bits received by the CPU may indicate that the firmware is authentic when it is not. The CPU then executes the firmware, and the attacker may have partial or complete control of the computing system.

In aspects, fault injection attacks may be avoided by causing security-critical design elements to operate with increased timing slack so that to security-guarantee operations may be performed before a fault injection attack causes a failure that otherwise would affect the security-critical design elements or that could cause other design elements, operating with standard timing slack for the clock speed of the computing system, to fail. Even if the fault injection attack succeeds in causing failure or other unintended operations of other design elements, because other design elements may fail before the security-critical design elements performing security-guarantee operations fail as a result of a fault injection attack, the attacker will not succeed in taking control of the computing system.

### Example Environment

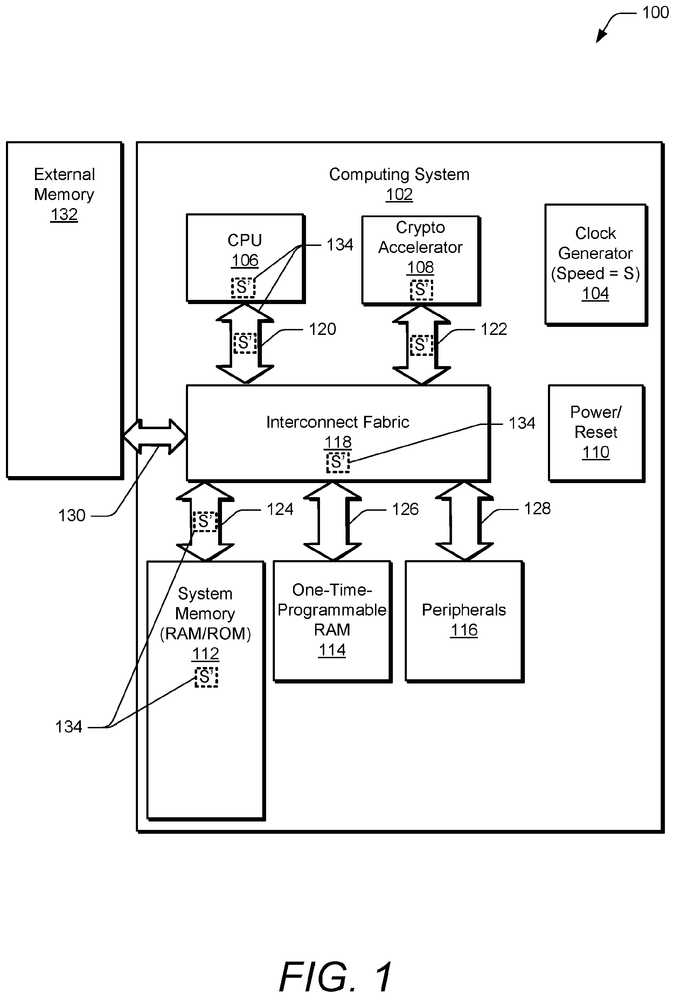

FIG. 1 illustrates an example environment 100 that includes a computing system 102 that operates with some of the design elements operating with increased timing slack to resist fault injection attacks. In aspects, the computing system 102 includes a clock generator 104 generating clock pulses at a first speed s. The computing system 102 also includes a number of design elements including a central processing unit (CPU) 106 and additional design elements including a crypto accelerator 108, a power/reset controller 110, a system memory 112 that may include one or more of random-access memory (RAM) and read-only memory (ROM), a one-time programmable (OTP) RAM 114, and one or more peripherals 116 (represented as a single device in FIG. 1).

The CPU 106 and other components previously described communicate via an interconnect fabric 118 that is coupled to the individual components by a series of buses 120, 122, 124, 126, and 128. These buses include a CPU-memory bus 120 that couples the CPU 106 with the interconnect fabric 118 and a memory-interconnect bus 120 that couples the system memory 112 with the interconnect fabric 118 as described in the foregoing example. One or more external buses, such as external memory bus 130, connect an external memory 132 with the interconnect fabric 118 of the computing system 102. In the foregoing example, the external memory 132 stores boot code that is used to securely boot the computing system 102, as further described below.

In aspects, one or more design elements of the computing system 102 determined to be involved in security-guarantee operations, such as the secure boot flow of the computing system 102, are designated as security-critical design elements. For example, in the example of FIG. 1, the CPU 106, the crypto accelerator 108, the system memory 112, the interconnect fabric 118, CPU-memory bus 120, and the memory-interconnect bus 124 are designated as security-critical design elements and are marked in FIG. 1 with the designation S' 134. The designation S' 134 signifies that the security-critical design elements are configured to operate with increased timing slack as compared with others of the design elements included in the computing system 102. In aspects, the security-critical design elements are configured to be able to operate at a higher clock speed than s, the clock speed of the clock generator 104. Because the security-critical design elements are able to operate at a higher clock speed, each of the security-critical design elements responds more quickly to each clock pulse in reaching a state to, for example, receive inputs or source outputs. Thus, even when operating at a lower clock speed, the security-critical design elements still perform individual processes more quickly which results in the security-critical design elements operating with increased timing slack at its inputs and outputs, as described further below.

The increased timing slack may allow the security-critical design elements to resist fault injection attacks. Some fault injection attacks seek to change or disrupt data values presented to various components. However, because of the security-critical design elements operating with increased timing slack, the security-critical design elements may be able to read and respond to data values even as the fault injection attack disrupts the operation of other design. Thus, even if the fault injection attack succeeds in disrupting the operation of these other design elements, effectively "breaking" these design elements, the security-critical design elements operating with increased timing slack may be able to perform security-guarantee operations before those other elements are broken. Therefore, even if the fault injection attack successfully disrupts other design elements and therefore disrupts operation of the computing system 102, completion of the security-guarantee operations by the security-critical design elements may prevent the fault injection attack from enabling an attacker to gain control of the computing system 102 or succeed in reaching other objectives.

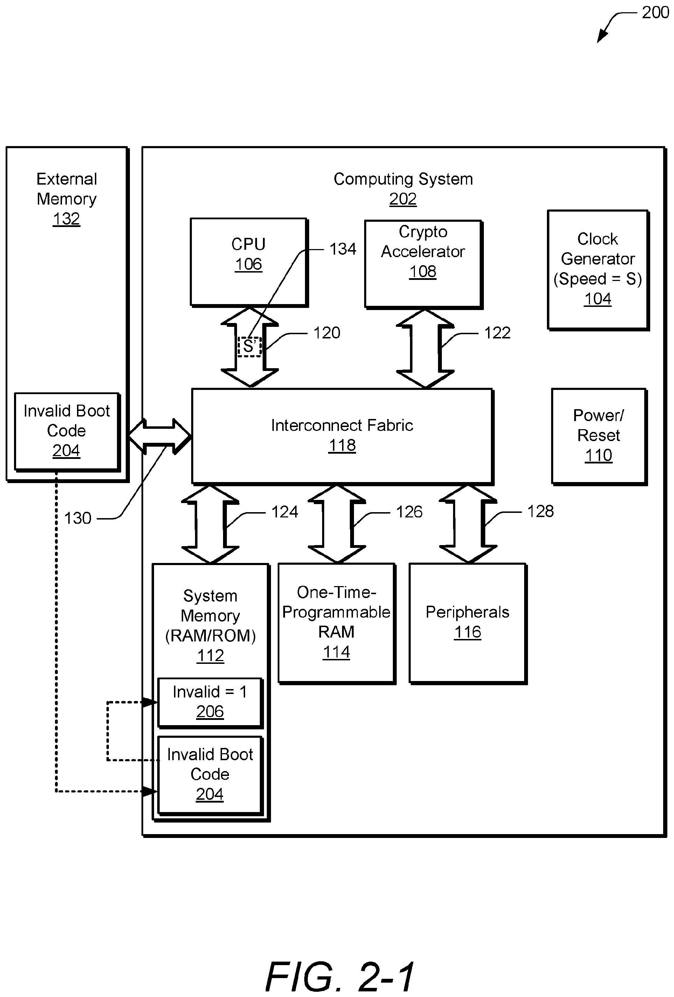

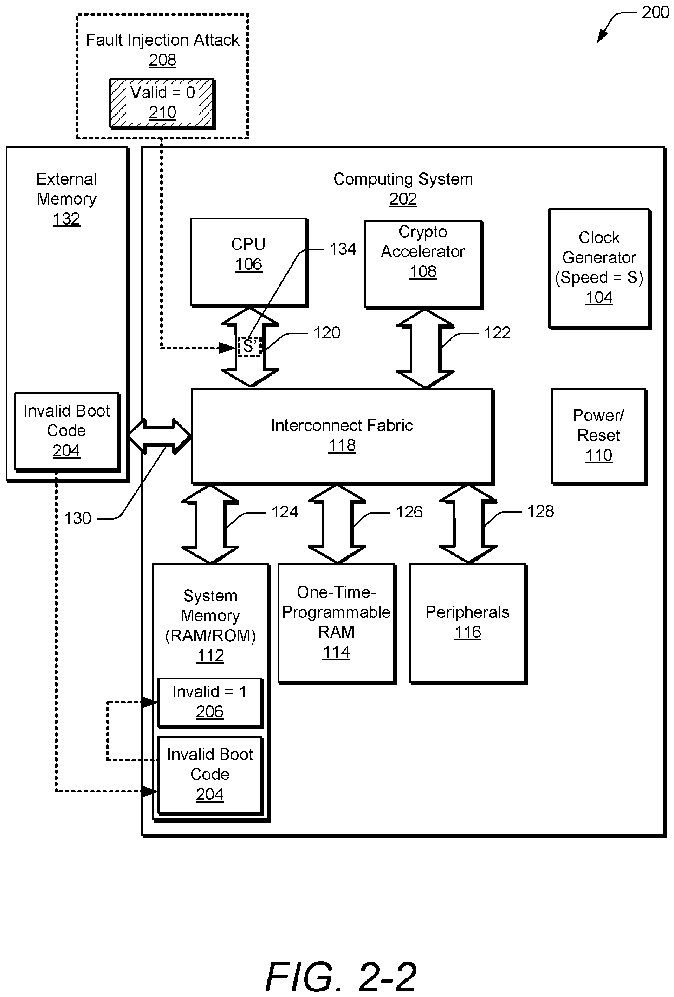

FIGS. 2-1 and 2-2 illustrate a system that includes a test version of the computing system 202 that may be used to determine which of the design elements should be designated as security-critical design elements and/or perform tests to determine whether a particular configuration including one or more selected design elements being designated as security-critical design elements is able to resist a test fault injection attack. In the foregoing example represented in the test version of the computing system 202 (hereinafter, the computing system 202), the CPU-memory bus 120 is the selected design element designated as a security-critical design element as represented by the designation S' 134. The designation S' 134 signifies that, as a security-critical design element, the CPU-memory bus 120 is configured to operate with increased timing slack to resist fault injection attacks, as described further below. The computing system 202 may include a sample of an actual device under test and the system 200 may include suitable equipment to supply inputs and evaluate outputs of the computing system 202. Alternatively, the computing system 202 may be a software model of the device under test and all of the system 200 may represent a software model to test one or more configurations of the computing system 202. In particular, in the examples of FIG. 2-1 and 2-2, a simulated fault injection attack (hereinafter the fault injection attack) is directed to causing invalid boot code to be executed by the computing system 202 to enable an attacker to try to take control of the computing system 202.

In FIG. 2-1, an attacker has caused invalid boot code 204 to have been stored in the external memory 132 and then loaded into the system memory 112. An authentication procedure to prevent authentication of the invalid boot code 204, such as may be executed by the CPU 106 or by the crypto accelerator 108, is a security-guarantee operation that should be secured against attacks to prevent attackers from seizing control of the computing system 202 or otherwise breaching the computing system 202 to gain access to data or otherwise disrupt operation of the computing system 202. As part of the security-guarantee operation, the invalid boot code 204 is evaluated with an error-checking routine and generates an invalid output value 206 which, in the foregoing example, is a high value 1.

Referring to FIG. 2-2, because the authentication procedure correctly generates the invalid output value 206, an objective of a fault injection attack 208 is to somehow replace the invalid output value 206 with a false valid output value 210 which, in the foregoing example is a low value 0. It will be appreciated that the invalid output value 206 may be overridden either by somehow replacing the invalid output value 206 or disrupting a device input that, without receiving the invalid output value 206 will default to or read a low value 0 as a result of the configuration of the design elements involved. In this case, the fault injection attack seeks to attack the CPU-memory bus 120 to cause the CPU-memory bus 120 to incorrectly read the false valid value 210 and, in turn, communicate to the CPU 106 that the invalid boot code 204 is valid. In this way, the test fault injection attack 208 seeks to disrupt the security-guarantee operation of authenticating boot code to be executed on the computing system 202.

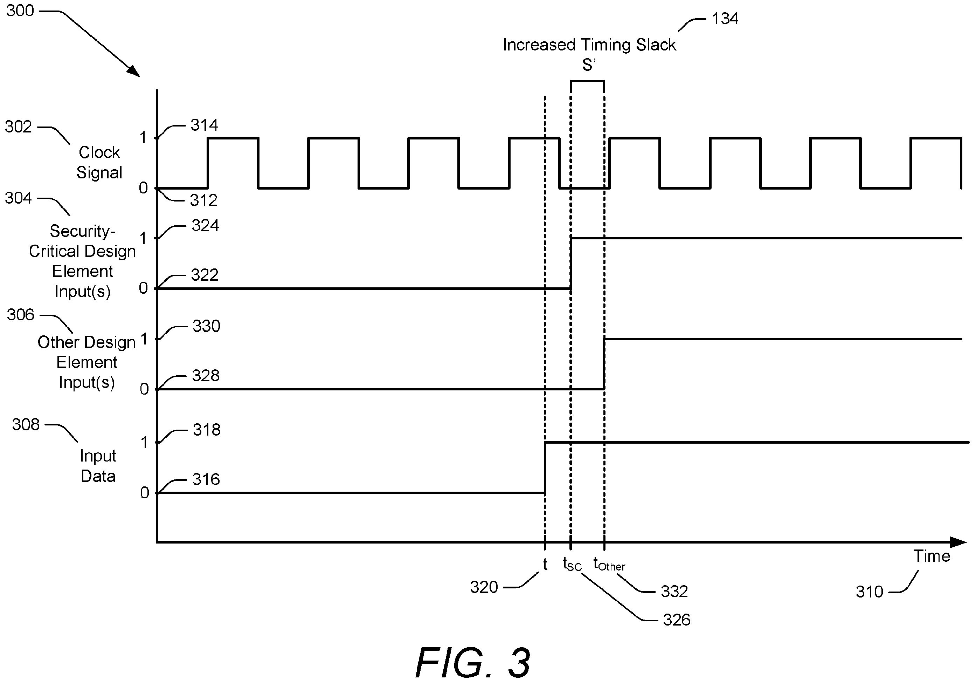

FIG. 3 is a timing diagram 300 illustrating one or more security-critical design elements operating with increased timing slack relative to other design elements. The timing diagram 300 depicts a clock signal 302, a security-critical design element input 304, an other design element input 306, and a data input 308 that is received by both the security-critical design element input 304 and the other design element input 306. The signals 302, 304, 306, and 308 are plotted over time 310.

The clock signal 302 is a square-wave-type clock signal 302 that oscillates between a low value 0 312 and a high value 1 314. The data input 308 switches from a low value 0 316 to a high value 1 318 at a time t 320. The security-critical design element input 304 and the other design element input 306 are responsive to the data input 308. After the data input 308 goes to the high value 1 318 at time t 320, the security-critical design element input 304 switches from a low value 0 322 to a high value 1 324 at time t_{SC} 326. Subsequently, the other design element input 306 switches from a low value 0 328 to a high value 2 330 at time t_{Other} 332. A difference between time t_{SC} 326 and time t_{Other} 332 represents the increased timing slack S' 134 (see FIGS. 1 through 2-2) with which the security-critical design element input 304 operates compared to the other design element input 306.

Thus, if a fault injection attack (not shown in FIG. 3) is applied between t_{SC} 326 and time t_{Other} 332 that, for example, affects the input data 308, the security-critical design element input 304 may be unaffected by the fault injection attack while the other design element input 306 may be affected by the fault injection attack. The increased timing slack S' 134 thus may enable the security-critical design element to complete a security-guarantee operation even while the fault injection attack disrupts the operation of other design elements. Even if the fault injection attack disrupts the operation of the other design elements and, as a result, disrupts operation of the computing system, the increased timing slack S' 134 at which the security-critical design elements operate may prevent the fault injection attack from enabling an attacker to take control of the computing system.

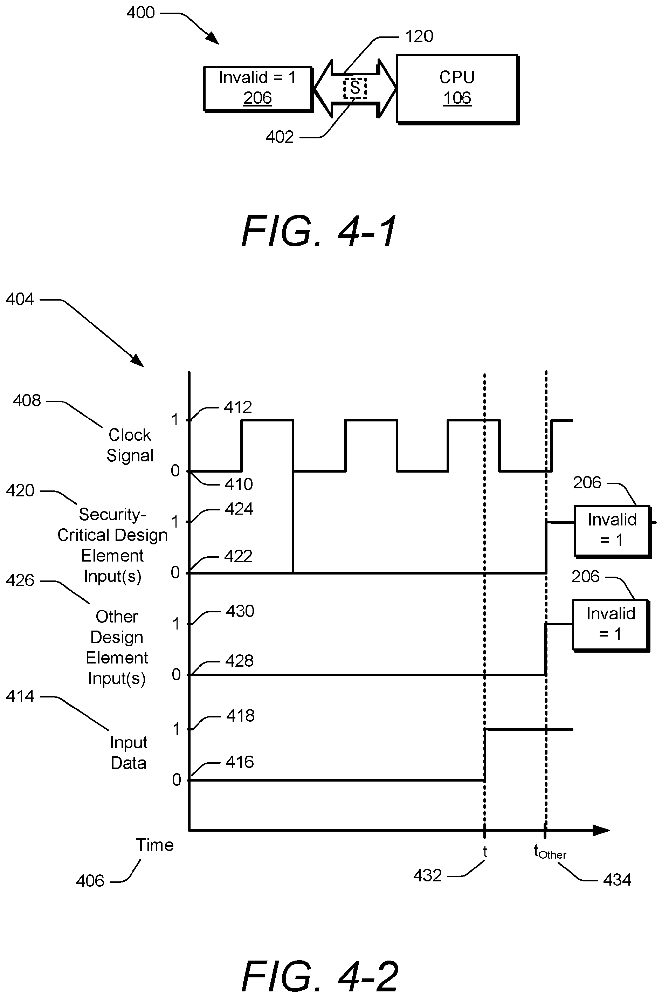

FIG. 4-1 shows how an aspect 400 of the security-guarantee operation is performed by the CPU-memory bus 120. In the aspect 400, the invalid output value 206, invalid = 1 (see FIG. 1) is correctly generated within the computing system 202 to indicate that the invalid boot code 204 is invalid. The invalid output value 206 is presented to the CPU-memory bus 120 which, in turn, presents the invalid output value 206 to the CPU 106. For the sake of contrast, FIG. 4-1 illustrates an example in which the CPU-memory bus 120 operates with standard timing slack, as reflected by the designation S 402 (which is the clock speed of the clock generator 104, indicating that the CPU-memory bus 120 is configured to operate with standard timing slack).

FIG. 4-2 shows a timing diagram 404 that, over time 406, shows values of a clock signal 408 that switches between a low value 0 410 and a high value 1 412 to clock the design elements of the computing system 202. Input data 414 that is presented to design elements of the computing system 202 (e.g., the CPU-memory bus 120) may present either a low value 0 416 or a high value 1 418. In the example of FIGS. 4-2, 5-2, 6-2, and 7-2, the input data 414 is a bit which represents the validity of the boot code 204 for which a low valid value 210, valid = 0 (see FIGS. 2-1 and 2-2), indicates that the boot code 204 is valid and a high invalid value 206, invalid = 1 (see FIGS. 2-1 and 2-2), indicates that the boot code 204 is invalid (see FIGS. 2-1 and 2-2). Continuing with the example of FIGS. 2-1 and 2-2, an attacker uses a fault injection attack 208 against the CPU-memory bus 120 to cause the CPU 106 to receive the value valid = 0 210 to falsely authenticate the invalid boot code 204 to enable an attacker to take control of or otherwise manipulate the computing system 202.

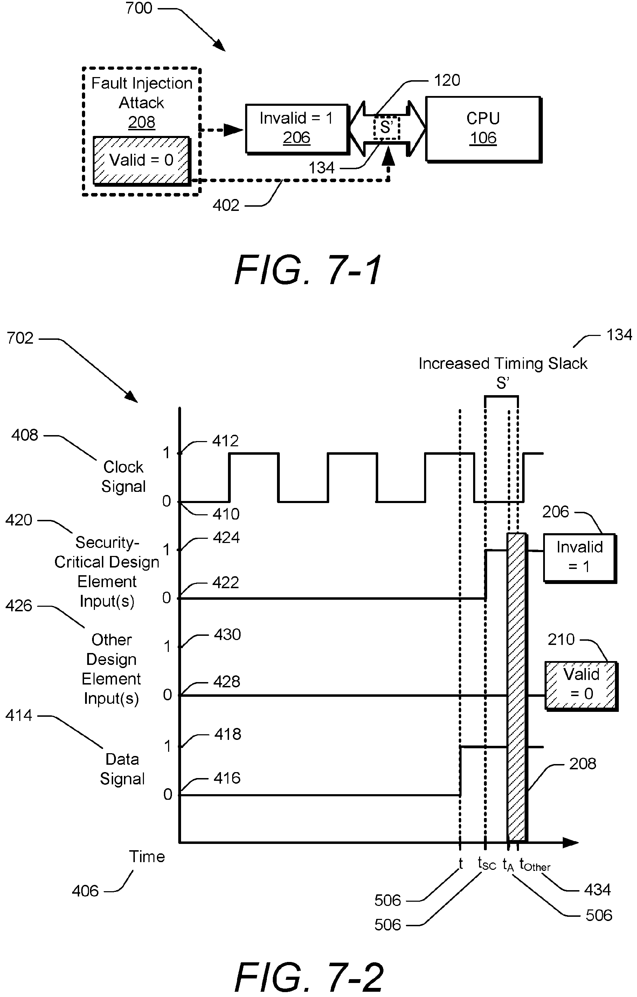

Responsive to the input data 414 and the pulses of the clock signal 408, the timing diagram 404 also shows what input data values are received by a security critical design element input 420. In the example of FIGS. 4-1 through 7-2, the security critical design element input 420 is the value presented by the CPU-memory bus 120 to the CPU 106 to signify the validity of boot code, which, in this example, is the invalid boot code 204. The security-critical design element input 420 may be a low value 422 or a high value 1 424. Similarly, an other design element input 426 responsive to the input data 414 also may be a low value 0 428 or a high value 1 430.

At a time t 432, the input data 414 switches to the high value 1 418 which, in this example, represents the invalid value 206 to signify to the CPU 106 via the CPU-memory bus 120 that the boot code is 204 is invalid. The security-critical design element input 420 and the other design element input 426, both operating with standard timing slack S 402 in the example of FIGS. 4-1 and 4-2, both latch the input data 414 at time t_{Other} 434, a time at which design elements operating with standard timing slack S 402 receive the input data 414. Responsive to the input data 414 switching to the high value 1 418 at time t 432, at time t_{Other} 434, the security-critical design element input 420 and the other design element input 426 switch to high values 1 424 and 430, respectively, to present the invalid value 206. Thus, although operating with standard timing slack 402, because no fault injection attack is presented, both the security-critical design element input 420 and the other design element input 426 receive the correct invalid value 206.

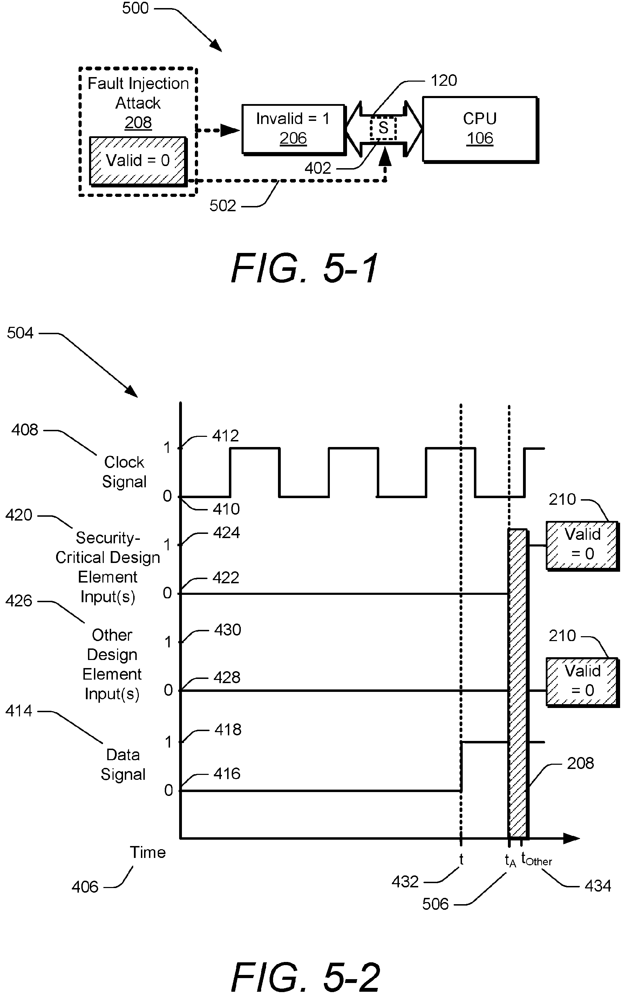

FIG. 5-1 shows an aspect 500 of the security-guarantee operation performed by the CPU-memory bus 120 when attacked by the fault injection attack 208. In the aspect 500, the fault injection attack 208 seeks to replace the correct, invalid output value 206 with the false valid value 210 by insertion 502 of the false valid value 210 at or on the CPU-memory bus 120. In the example of FIGS. 5-1 and 5-2, as in the example of FIGS. 4-1 and 4-2, the CPU-memory bus 120 operates with standard timing slack as indicated by the designation S 402.

FIG. 5-2 shows a timing diagram 504 that, over time 406, again shows values of the clock signal 408 and the data signal 414 presented to the design element inputs 420 and 426. As in the example of FIG. 4-2, both the security-critical design element input 420 and the other design element input 426 operate with standard timing slack S 402 in the example of FIGS. 5-1 and 5-2.

As in the example of FIG. 4-2, the timing diagram 504 of FIG. 5-2 shows the value of the data signal 414 switching to the high value 1 418 at time t 432. However, in contrast to the example of FIG. 4-2, before the security-critical design element input 420 or the other design element input 426 operating with standard timing slack S 402 are able to latch the high value 1 418 of the data signal 414, the fault injection attack 208 (represented by a shaded bar in FIG. 5-2) is applied at time t_{A} 506. As a result, before the security-critical design element input 420 and the other design element input 426 operating with standard timing slack S 402 are able to latch the high value 1 418 of the data signal 414, the fault injection attack 208 causes the security-critical design element input 420 and the other design element input 426 to latch the low value 0 422 and 428, respectively. Consequently, all the design elements may erroneously present the valid value 210, causing the invalid boot code 204 to be wrongly authenticated. As a result, the fault injection attack 208 may enable the attacker to take control of or otherwise disrupt operation of the computing system 202 (see FIGS. 2-1 and 2-2), successfully disrupting the security-guarantee operation of the secure boot flow.

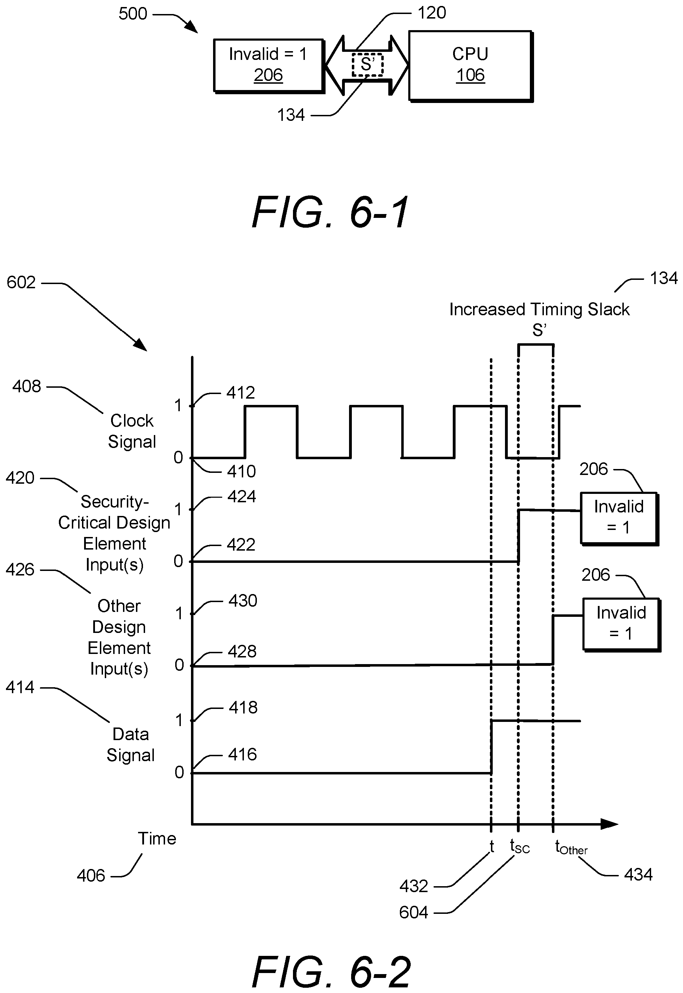

However, in aspects, operating security-critical design elements operating with increased timing slack potentially may resist or thwart the fault injection attack 208. Referring to FIG. 6-1, an aspect 600 illustrates an example in which the CPU-memory bus 120 operates with increased timing slack S' 134. FIG. 6-2 shows a timing diagram 602 that, as in the foregoing examples of FIGS. 4-2 and 5-2 over time 406, shows values of a clock signal 408 the data signal 414 presented to the design element inputs 420 and 426. In contrast to the examples of FIGS. 4-1 through 5-2, in which both the security-critical design element input 420 and the other design element input 426 operate with standard timing slack S 402, in the example of FIGS. 6-1 and 6-2, the security-critical design element (e.g., the CPU-memory bus 120) operates with increased timing slack X' 134.

The timing diagram 602 shows that, responsive to the data signal 414 switching to the high value 1 418 at time t 432, the other design element input 426 once again switches to the high value 1 430 at time t_{Other} 434. However, because the security-critical design element is operating with increased timing slack, responsive to the data signal 414 switching to the high value 1 418 at time t 432, the security-critical design element input 420 switches to the high value 424 at time t_{SC} 604. Both the security-critical design element input 420 and the other design element input 426 latch the invalid value 206. However, the security-critical design element input 420 latches the high value 1 418 of the data signal 414 at t_{SC} 604 earlier than t_{Other} 434 as a result of the increased timing slack S' 134 with which the security-critical design element (e.g., the CPU-memory bus 120 of FIG. 6-1) is operating.

FIG. 7-1 shows an aspect 700 of the security-guarantee operation performed by the CPU-memory bus 120 when attacked by the fault injection attack 208, as in the example of FIG. 5-1. In the aspect 700, the fault injection attack 208 seeks to replace the correct, invalid output value 206 with the false valid value 210 by insertion 502 of the false valid value 210 at or on the CPU-memory bus 120. In contrast to the example of FIG. 5-1, however, the CPU-memory bus 120, a security-critical design element performing one or more security-guarantee operations, is configured to operate with increased timing slack S' 134.

FIG. 7-2 shows a timing diagram 702 that, over time 406, again shows values of the clock signal 408 and the data signal 414 presented to design element inputs 420 and 426. However, unlike the examples of FIGS. 4-2 and 5-2 but like the example of FIG. 6-2, the security-critical design element input 420 operates with increased timing slack S' 134 while the other design element input 426 operates with standard timing slack S 402.

As in the previous examples of FIG. 4-2, the timing diagram 702 of FIG. 7-2 shows the value of the data signal 414 switching to the high value 1 418 at time t 432. However, in contrast to the example of FIG. 6-2, before the other design element input 426 operating with standard timing slack S 402 is able to latch the high value 1 418 of the data signal 414, the fault injection attack 208 (represented by a shaded bar in FIG. 7-2) is applied at time t_{A} 506. As a result, before the other design element input 426 operating with standard timing slack S 402 is able to latch the high value 1 418 of the data signal 414, the fault injection attack 208 causes the other design element input 426 to latch the low value 0 428. Consequently, the other design element input 426 latches the valid value 210 that falsely indicates that the invalid boot code 204 is valid.

However, because the security-critical design element operates with increased timing slack S' 134, the security-critical design element input 420 latches the high value 1 418 of the data signal 414 at time t_{SC} 506 before the fault injection attack 208 is applied. As a result, despite the fault injection attack 208, the security-critical design element input 420 latches the invalid value 206. Accordingly, in the example of FIG. 7-1 in which the CPU-memory bus 120 is designated as a security-critical design element operating with increased timing slack S' 134, the CPU-memory bus 120 presents the invalid value 206 to the CPU 106 which may thwart the fault injection attack 208 and prevent an attacker from taking control of or otherwise disrupting operation of the computing system 202.

### Identifying Security-Critical Design Elements

As previously described, clocking security-critical design elements operating with increased timing slack may prevent fault injection attacks from disrupting the operation of a computing device. Success in preventing fault injection attacks from succeeding may depend on identifying which of the design elements included in a computing system may be susceptible to fault injection attacks should be designated as security-critical design elements that should be operated with increased timing slack. How some design elements affect or are affected by other elements may determine which design elements should be designated as security-critical design elements in performing security-guarantee operations such as completing secure boot flow and other processes.

Determining whether an individual design element should be regarded as a security-critical element may be determined by testing or simulating testing of how an individual design element responds to a series of stimuli including a range of data inputs, input voltage changes, or other stimuli that may be used in a fault injection attack. In a manner similar to that described with reference to the examples of FIGS. 5-1 and 5-2 and FIGS. 7-1 and 7-2, individual design elements may be tested to determine their response to fault injection attacks.

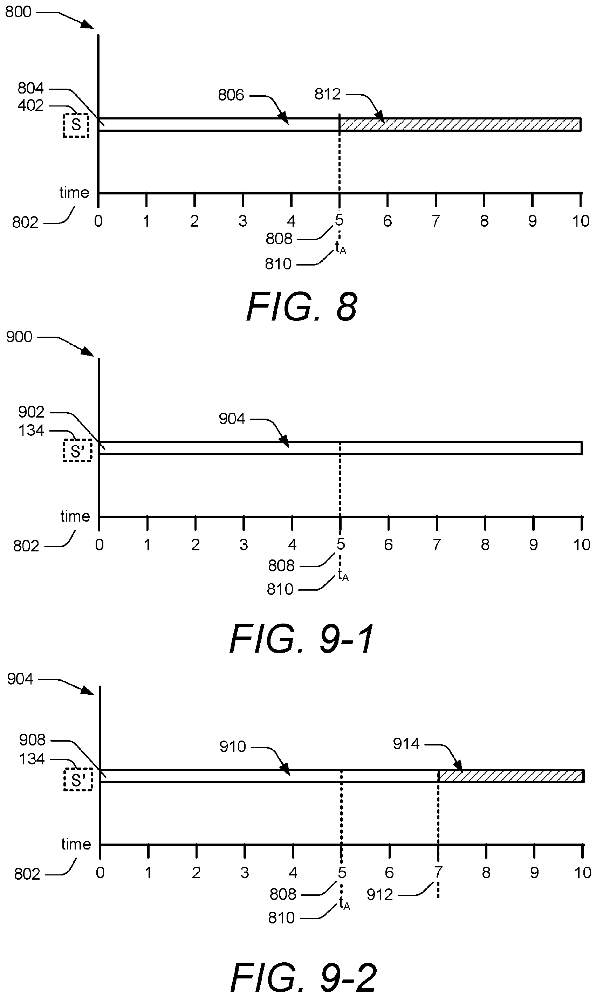

For example, FIG. 8 shows a status diagram 800 for a design element operating with standard timing slack S 402 over time 802. A status bar 804 represents the operability of the design element under test. A solid pattern 806 of the status bar 804 indicates that the design element initially operates as expected. A time 5 808 (where 5 represents a randomly-selected clock cycle) represents a time t_{A} 810 at which a fault injection attack is applied to the design element. The fault injection attack immediately causes the design element to fail as represented by the status bar 804 showing a shaded pattern 812.

FIGS. 9-1 and 9-2 show status diagrams 900 and 906, respectively, depicting examples at which the design element is operated at increased timing slack S' 134 over time 802 but, in the examples of FIGS. 9-1 and 9-2, the design element is able to withstand the fault injection attack. Referring to FIG. 9-1, a status diagram 902 shows that the application of the fault injection attack at time t_{A} 810 does not cause the design element operating with increased timing slack S' 134 to fail, as represented by the status bar 902 continuously presenting a solid pattern 904. Referring to FIG. 9-2, the status diagram 906 shows that the application of the fault injection attack at time t_{A} 810 does not immediately cause the design element operating with increased timing slack S' 134 to fail, as represented by the status bar 908 presenting a solid pattern 910 after time 5 708. However, at time 7 912, the design element operating with increased timing slack S' 134 does fail, as represented by the status bar 906 presenting a shaded pattern 914 after time 7 912.

It will be appreciated that it is significant not only whether a design element fails, but when a design element fails in response to a fault injection attack. For example, as previously described with reference to FIG. 7-2, even when one design element fails in response to the fault injection attack 208, not all of the design elements may fail. However, the interoperation of the design elements may determine whether the fault injection attack may succeed in disrupting a security-guarantee operation. In the examples of FIGS. 5-2 and 7-2, at least one design element was disrupted by the fault injection attack 208. However, in the example of FIGS. 7-1 and FIG. 7-2, because the CPU-memory bus 120 was designated as a security-critical design element to be operated with increased timing slack S' 134, the CPU-memory bus 120 was able to complete its aspect of the security-guarantee operation. Thus, determining whether and/or when a design element fails, as illustrated in FIGS. 8, 9-1, and 9-2 may be highly useful for evaluating whether the design element under test should be designated as a security-critical design element that should be operated with increased timing slack S' 134.

In addition, determining whether and when each of a number of design elements may fail in response to a fault injection attack may be used to determine a chain of influence including multiple design elements that should be designated as security-critical design elementsto be operated with increased timing slack. Considering the example of FIGS. 4-1 through 7-2, the CPU-memory bus 120 was tested to determine if it should be designated as a securitv-critical design element. It will be appreciated that, if the CPU 106 were being evaluated to determine if it should be designated as a security-critical design element for the completion of a security-guarantee operation such as secure boot flow, the ability of the CPU 106 to successfully complete the secure boot flow when subject to the fault injection attack 208 depends on whether the CPU-memory bus 120 was designated as a security-critical design element configured to operate with increased timing slack S' 134. If the CPU-memory bus 120 operating at standard timing slack S 402 is compromised by the fault injection attack 208 as in the example of FIGS. 5-1 and 5-2, the CPU 106 also will be compromised. Thus, at a minimum, the CPU 106 and the CPU-memory bus 120 should be included within a chain of influence that might be subject to the fault injection attack 208. Any devices within the chain of influence may then be designated as security-critical design elements that should be configured to operate with increased timing slack S' 134.

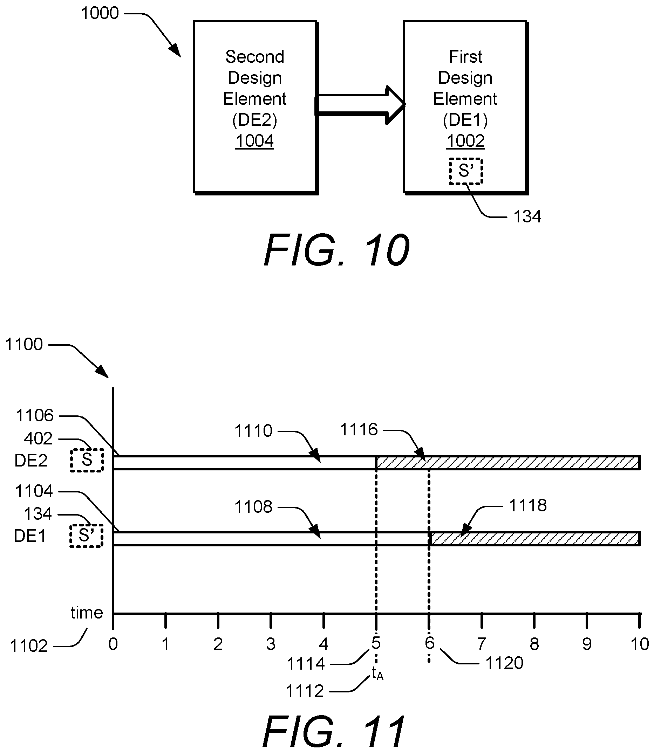

Referring to FIG. 10, an aspect 1000 of a computing system (e.g., the computing systems 102 and 202) includes a first design element (DE1) 1002 operating with increased timing slack S' 134 and a second design element (DE2) 1004. The collective operation of the design elements 1002 and 1004 may be evaluated to determine if the design elements 1002 and 1004 constitute a chain of influence in which both the design elements 1002 and 1004 should be operated with increased timing slack S' 134 to resist fault injection attacks.

FIG. 11 shows a status diagram 1100 showing, over time 1102, the operability of the first design element 1002 and the second design element 1004 represented by status bars 1104 and 1106, respectively. Before application of a fault injection attack, the status bar 1104 for the first design element 1002 and the status bar 1106 for the second design element 1004 both present solid patterns (e.g., solid pattern 1108, solid pattern 1110), indicating as in the examples of FIGS. 8, 9-1, and 9-2, that the design elements 1002 and 1004 are operating correctly. A fault injection attack is applied at t_{A} 1112 at time 5 1114 (which again is a randomly-chosen point). The second design element 1004 immediately fails, as represented by the status bar 1106 presenting a shaded pattern 1116 at time 5 1114. The first design element 1002 then fails, as represented by the status bar 1104 presenting a shaded pattern 1118 at time 6 1020. One cycle passing between application of the fault injection attack at time 5 1114 and failure of the first design element 1002 at time 6 1120 may be sufficient for completion of a security-guarantee operation. If this is the case, it may not be necessary to designate the second design element 1004 as a security-critical design element that should be operated with increased timing slack S' 134. On the other hand, if the failure of the first design element 1002 at time 6 1120 will prevent completion of a security-guarantee operation, the second design element 1004 may be designated as a security-critical design element or at least a test should be conducted with the second design element 1004 being treated as a security-critical design element operating with increased timing slack S' 134 to resist the fault injection attack.

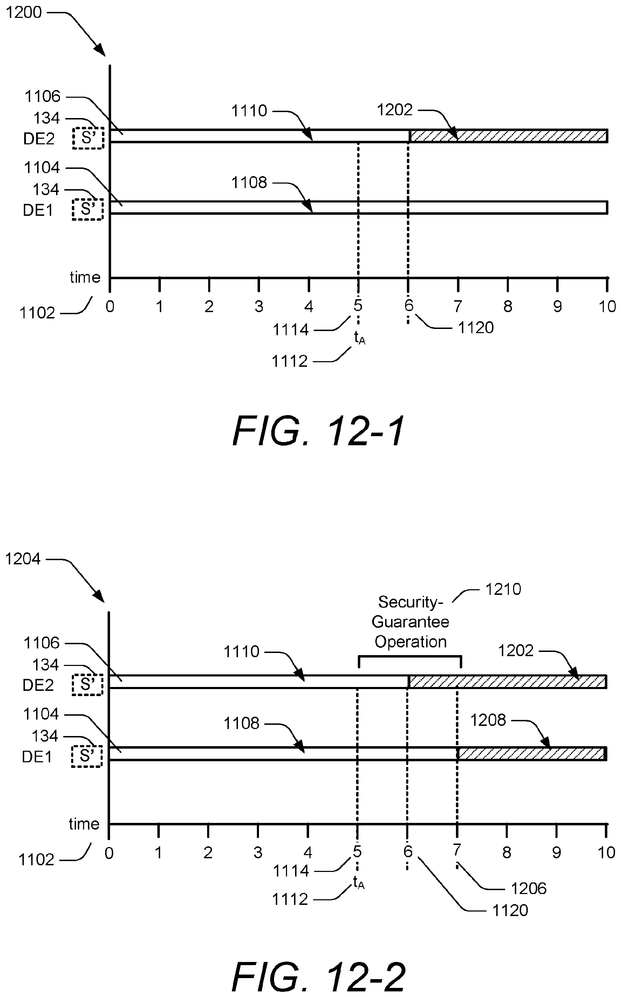

FIGS. 12-1 and 12-2 show two cases in which the second design element 1004 is considered to be part of the chain of influence with the first design element 1002. Because both design elements 1002 and 1004 are considered to be security-critical design elements in a chain of influence, both design elements are operated with increased timing slack S' 134. The status diagram 1200 of FIG. 12-1 is similar to the status diagram 1100 of FIG. 11 with the exception that, because the second design element 1004 operates with increased timing slack S' 134, the second design element 1004 does not fail as a result of the fault injection attack until time 6 1120, as represented by the status bar 1106 presenting a shaded pattern 1202 only after time 6 1120. Moreover, apparently because the second design element 1004 does not fail until time 6 1120, the status bar 1104 shows that the first design element 1002 does not fail at all and continues to present a solid pattern 1108. Thus, testing the chain of influence resulting from designating the second design element 1004 as a security-critical design element operating with increased timing slack S' 134 enables the first design element 1002 to resist the fault injection attack.

FIG. 12-2 illustrates a slightly different example in a status diagram 1204. The status diagram 1204 shows the second design element 1004 again being disrupted at time 5 1114, at the time t_{A} 1112 when the fault injection attack is applied. In this example, however, the first design element 1002 also is disrupted at time 7 1206 as a result of the effect of the fault injection attack on the second design element 1004, as depicted by the status bar 1104 presenting a shaded pattern 1208 after time 7 1206. It could be concluded that operating both the design elements 1002 and 1004 with increased timing slack S' 134 as part of a chain of influence did not resist the fault injection attack. However, as shown in FIG. 12-2, because the first design element 1002 was not disrupted until time 7 1206, a security-guarantee operation 1210 that operates from time 5 1114 to time 7 1206 was able to be completed. Thus, analyzing the design elements as to how possible fault injection attacks may disrupt security-guarantee operations may be used to determine which design elements should be designated as security-critical design elements that should be operated with increased timing slack S' 134 to protect against fault injection attacks.

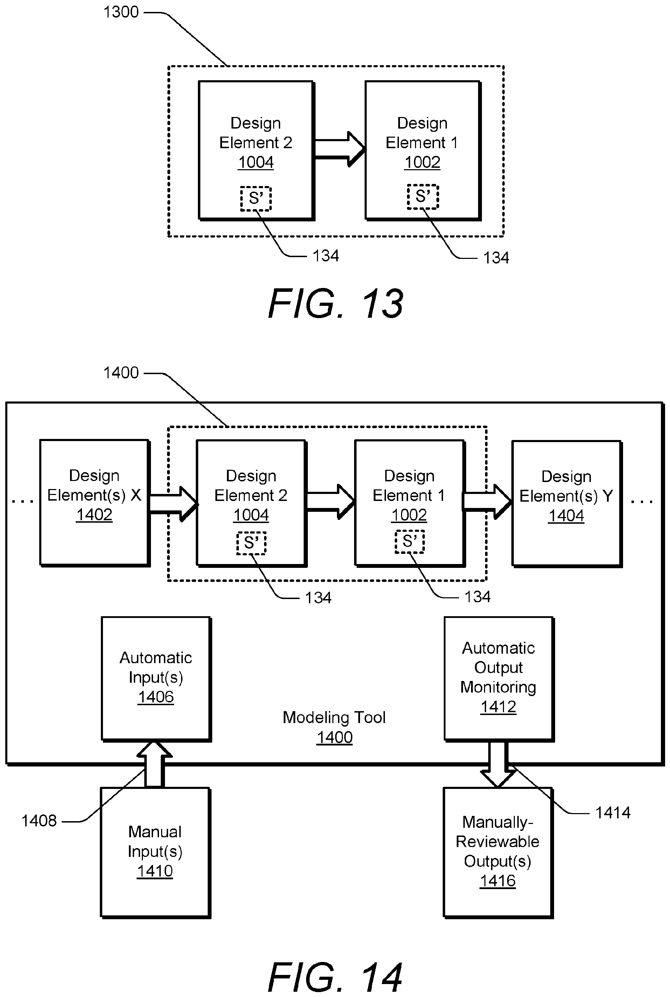

Referring to FIG. 13, by recognizing that both design elements 1002 and 1004 are part of a chain of influence 1300 in which both the design elements 1002 and 1004 should be designated as security-critical design elements and operated with increased timing slack S' 134, the security-guarantee operation 1210 (see FIG. 11-2) is protected from the fault injection attack. Designating individual design elements as security-critical design elements or identifying additional design elements as security-critical design elements that should be operated with increased timing slack S' 134 may prevent fault injection attacks from disrupting security-guarantee operations and thus protect against an attacker taking control of or otherwise breaching a computing system.

FIG. 14 illustrates a modeling tool 1400 that may be used to design elements to determine design elements that should be identified as security-critical design elements as well as to identify chains of influence that include groups of design elements that should be identified as security-critical design elements. As in the example of FIG. 13, the design elements 1002 and 1004 were identified as being security-critical design elements that should be configured to operate with increased timing slack S' 134 as part of the chain of influence 1300 that resisted the fault injection attack described with reference to FIGS. 12-1 and 12-2. In addition, other design elements, including any number of design elements X 1402 that may provide inputs to the identified chain of influence 1300 and any number of design elements Y 1404 that may depend on outputs of the identified chain of influence 1300, also should be tested for the effect on whether the fault injection attack affects the design elements 1002 and 1004. The effect resulting from applying one or more fault injection attacks to, for example, the design elements X 1402, and evaluating the effect on the design elements Y 1404 may identify other design elements that should be included in the chain of influence and configured to operate with increased timing slack S' 134.

The modeling tool 1400 may include preprogrammed automatic inputs 1406 that simulate known or hypothesized fault injection attacks by applying inputs or other stimuli, alone or in combination, to any of the design elements 1002, 1004, 1402, and 1404. The modeling tool 1400 also may include an input interface 1408 through which manual inputs 1410 may be applied to test the design elements 1002, 1004, 1402, and 1404 in response to the applied manual inputs 1410. The modeling tool 1400 also incorporates automatic output monitoring 1412 configured to identify when one or more of the design elements 1002, 1004, 1402, and 1404 is disrupted by any of the automatic inputs 1406 or manual inputs 1410 to identify any of the design elements 1002, 1004, 1402, and 1404 is disrupted by any of the automatic inputs 1406 or manual inputs 1410 and to identify any of the design elements 1002, 1004, 1402, and 1404 that should be considered as security-critical design elements or included in the chain of influence. The modeling tool 1400 also includes an output interface 1414 that is configured to generate one or more manually-reviewable outputs 1416 that may allow researchers to evaluate when one or more of the design elements 1002, 1004, 1402, and 1404 is disrupted by any of the automatic inputs 1406 or manual inputs 1410. It will be appreciated that the modeling tool 1400 may configure any of the design elements 1002, 1004, 1402, and 1404 to operate with increased timing slack S' 134 or simulate the design elements 1002, 1004, 1402, and 1404 being able to operate with increased timing slack S' 134 to determine how the design elements 1002, 1004, 1402, and 1404 should be configured.

The testing or simulation performed by the modeling tool 1400 may be performed on an actual device under test, such as a system-on-chip (SOC) with supporting external devices, or may be performed with a software model of the device under test. In either case, an automatically applied series of stimuli to apply anticipated or hypothesized fault injection attacks may be applied to one or more of the design elements of the device under test. Response of the individual design elements, the chain of influence of each of the design elements, and the response of design elements in the chain of influence may be evaluated to determine which of the design elements should be designated as security-critical design elements that may be clocked at a higher clock speed, as previously described.

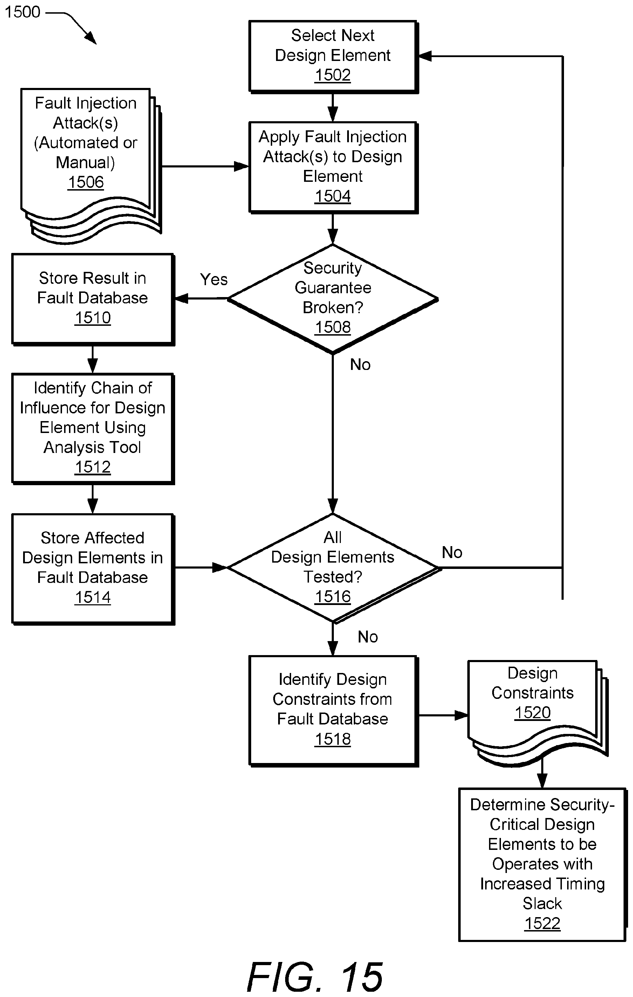

Referring to FIG. 15, an example testing methodology 1500 may be used to evaluate a device under test when subjected to a plurality of fault injection attacks. At a block 1502, a next design element is selected to be subjected to stimuli, in the form of data inputs, voltage input changes, or other stimuli that might be used in a software-based or hardware-based fault injection attack. At a block 1504, a collection of fault injection attacks 1506, which may include automated, programmed fault injection attacks or manually applied hardware or software attacks, are accessed and one or more of the fault injection attacks are applied to the device under test. At a decision block 1508, it is determined if a security guarantee has been broken, such as the CPU 106 being caused to load invalid boot code 204 as previously described with reference to FIGS. 2-1 and 2-2. If a security guarantee is determined to have been broken in response to a particular fault injection attack, at a block 1510, the result is in stored in a fault database (not shown in FIG. 15).

As previously described with reference to FIGS. 10 through 13, a fault injection attack may affect one design element directly whose response or output may then affect another of the design elements in a chain of influence. At a block 1512, the chain of influence for design elements of the device under test may be identified using an analysis tool, such as a computer-executable modeling tool that models a response of each of the design elements in response to input conditions. The analysis tool may include a database that relates the inputs and outputs of each of the device elements to evaluate how an effect any one of the outputs of the design element under test may affect other design elements that receive these outputs as inputs. Correspondingly, for the design element under test, it may be determined which other design elements generate outputs that are received as inputs by the design element under test and that may, in turn, further affect the operation of the design element under test. Thus, using the analysis tool, the cause and effect for a chain of interconnected design elements may be evaluated in response to fault injection attacks that affect the operation of the design element under test to determine how that fault injection attacks affect those interconnected design elements. Once the analysis of the chain of influence is completed, along with the results of the fault injection attack on the design element under test stored at the block 1510, at a block 1514, the effect on other design elements in the chain of influence are stored in the fault database as a consequence of the fault injection attack.

If it was determined at the decision block 1508 that the security guarantee was not broken or after the result of the fault injection attack on the design element under test and/or its chain of influence have been evaluated and stored at blocks 1510, 1512, and 1514, at a decision block 1516, it is determined if each of the design elements has been tested according to the fault injection attacks 1506. If not, the method 1500 reverts to the block 1502 to select a next design element and the previously-described process is repeated for the next design element. On the other hand, if it is determined at the decision block 1516 that all of the design elements have been tested, at a block 1518, using the fault database compiled from testing the design elements, design constraints 1520 are identified to be used in creating and/or revising the design of the device under test to make it resistant to the fault injection attacks 1506. Using the design constraints 1520, at a block 1522 it is determined which of the design elements should be designated as security-critical elements and, as previously described, clocked at a higher clock speed to resist fault injection attacks.

In aspects, as mentioned with reference to FIG. 14, processes used in the identification or selection of security-critical design elements may include both automated and manual processes. Automated tools may recognize the manifestation of faults as a result of a fault injection attack, although the conclusions of the automated tools may be supplemented by observers to the automated testing or with knowledge gained from previous testing or operations. Similarly, what design elements should be included in a chain of influence may be determined automatically and/or manual designation of security-critical elements may be made to supplement or change the automatic determinations based on knowledge gained from previous testing or operations.

### Example Systems Using Increased Timing Slack to Resist Fault Injection Attacks

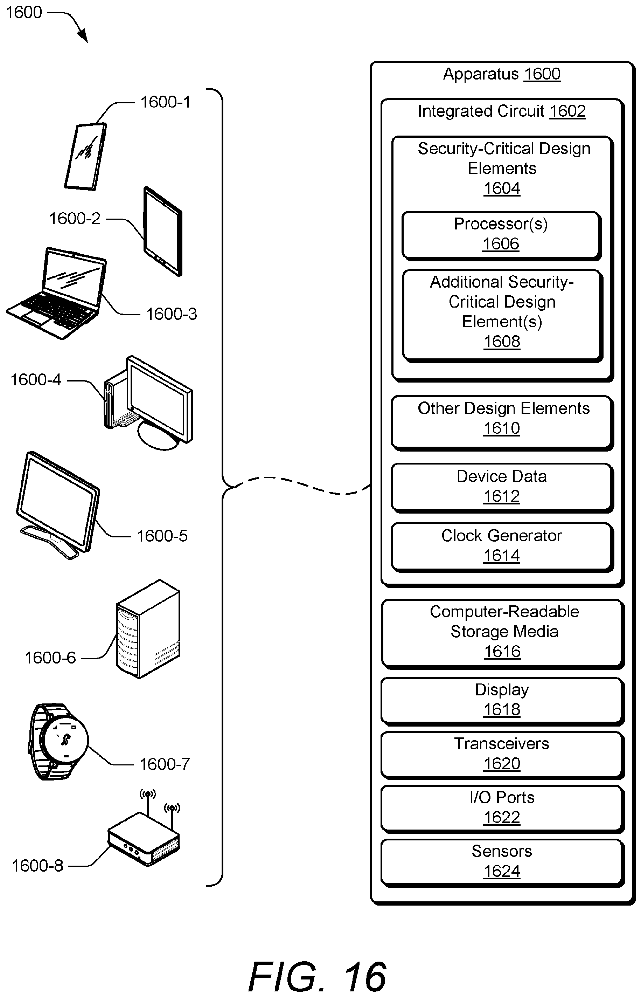

Referring to FIG. 16, a number of apparatuses 1600 may include a device, such as a system-on-chip device, that is configured to resist fault injection attacks as previously described. The apparatus 1600 may be implemented as any suitable device, some of which are illustrated as a smart-phone 1600-1, a tablet computer 1600-2, a laptop computer 1600-3, a gaming console 1600-4, a desktop computer 1600-5, a server computer 1600-6, a wearable computing device 1600-7 (e.g., smart-watch), and a broadband router 1600-8 (e.g., mobile hotspot). Although not shown, the apparatus 1600 may also be implemented as any of a mobile station (e.g., fixed- or mobile-STA), a mobile communication device, a client device, a user equipment, a mobile phone, an entertainment device, a mobile gaming console, a personal media device, a media playback device, a health monitoring device, a drone, a camera, an Internet home appliance capable of wireless Internet access and browsing, an Internet-of-Things (IoT) device, and/or other types of electronic devices. The apparatus 1600 may provide other functions or include components or interfaces omitted from FIG. 16 for the sake of clarity or visual brevity.

The apparatus 1600 includes an integrated circuit 1602, such as a SOC device. As previously described, the integrated circuit 1602 may include design elements designated as security-critical design elements 1604, such as one or more processors 1606 and additional security-critical design elements 1608, such as the crypto accelerator 108 (see FIGS. 2-1 and 2-2). The security-critical design elements 1604 are configured to operate with increased timing slack to resist fault injection attacks, as previously described. The integrated circuit 1602 also may include other design elements 1610 that are not determined to be security-critical design elements and that are configured to operate with standard timing slack. The integrated circuit 1602 also may maintain device data 1612 used to control the integrated circuit 1602. The integrated circuit 1602 also may include a clock generator 1614.

The apparatus also includes other elements, such as computer-readable storage media 1616 including any suitable type of memory media or storage media. The computer-readable storage media may include read-only memory (ROM), programmable ROM (PROM), random access memory (RAM), dynamic RAM (DRAM), static RAM (SRAM), or Flash memory. In the context of this discussion, the computer-readable storage media 1616 of the apparatus 1600 is implemented as at least one hardware-based or physical storage device, which does not include transitory signals or carrier waves. Applications, firmware, and/or an operating system (not shown) of the apparatus 1600 can be embodied on the computer-readable storage media 1616 as processor-executable instructions, which may be executed by the one or more processors 1606 to provide various functionalities described herein. The computer-readable storage media 1616 may also store user data or user media that is accessible through the applications, firmware, or operating system of the apparatus 1600.

The apparatus 1600 may also include a display 1618, transceivers 1620, input/output ports (I/O ports) 1622 and/or sensors 1624. The display 1618 may be operably coupled with one of the one or more processors 1606 (e.g., graphics processing unit (GPU)) and configured to graphically present respective interfaces of an operating system or applications of the apparatus 1600. The transceivers 1620 may be configured to enable wired or wireless communication of data (e.g., device data 1612) over wired or wireless networks according to any suitable communication protocol. The I/O ports 1622 of the apparatus 1600 may include universal serial bus (USB) ports, coaxial cable ports, and other serial or parallel connectors (including internal connectors) useful to couple the electronic device to various components, peripherals, or accessories such as keyboards, microphones, or cameras. The sensors 1624 may include various motion sensors, ambient light sensors, acoustic sensors, capacitive sensors, infrared sensors, temperature sensors, radar sensors, or magnetic sensors. Alternatively or additionally, the sensors 1624 may enable interaction with, or receive input from, a user of apparatus 1600, such as through touch sensing, gesture sensing, or proximity sensing. The sensors 1624 may include devices used to detect voltage levels or temperature changes that may be used to detect hardware-based fault injection attacks.

### Example Circuit Components

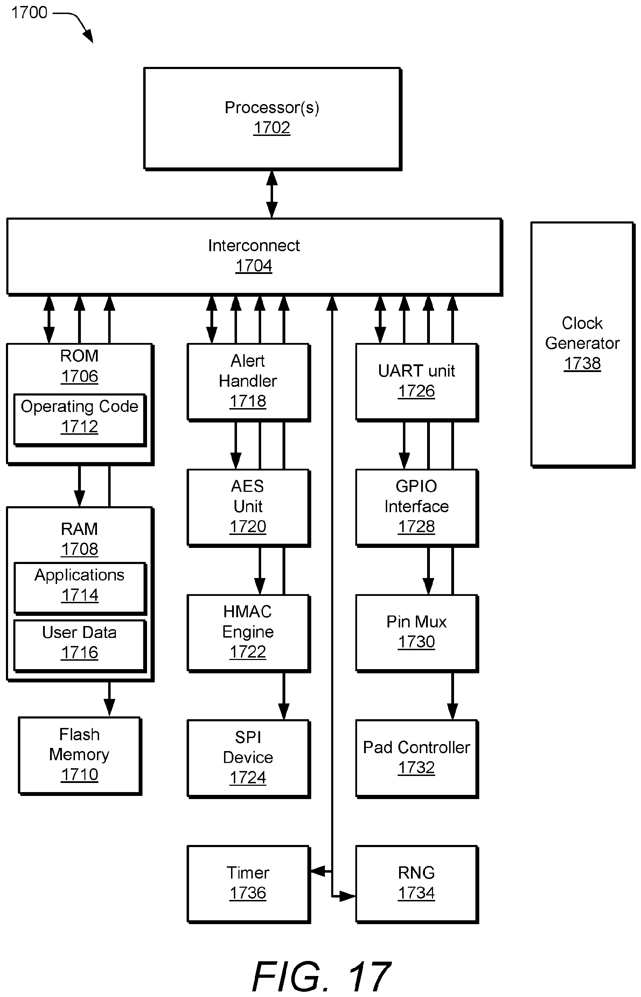

FIG. 17 illustrates a system 1700 that may be adapted as herein described to resist fault injection attacks by clocking some components at a higher clock speed. The system 1700 includes one or more processors 1702 that may be coupled with the circuit components through an interconnect 1704 and/or may be coupled directly with other components or interfaces. In this example, the circuit components include various memory devices of any suitable configuration (e.g., computer-readable storage media 1616 of FIG. 16) including one or more of read-only memory (ROM) 1706, random-access memory (RAM) 1708, and a flash memory 1710. Although not shown, other memories may be included, such as one-time programmable memory devices and/or memories coupled via other components, such as serial peripheral interface- (SPI-) or USB-coupled memories. Depending on the configuration, the ROM 1706 may include operating code 1712, such as an operating system, for controlling the system 1700 while the RAM 1708 may include applications 1714 and user data 1716. Alternatively, some of this data may be stored in the flash memory 1710 or other memory (not shown)

As shown in FIG. 17, the system 1700 may also include an alert handler 1718, an advanced encryption standard (AES) unit 1720, a hash-based message authentication code (HMAC) engine 1722, and/or a serial peripheral interface (SPI) device 1724. The system 1700 also may include a universal asynchronous receiver/transmitter (UART) unit 1726, a general-purpose input/output (GPIO) interface 1728, a pin multiplexer (Mux) 1730, and a pad controller 1732. The system also may include a random number generator (RNG) 1734, from which the other components may obtain high entropy values to use as authentication tokens, and/or a timer 1736 (e.g., watchdog timer).

As previously described, the system 1700 also includes a clock generator 1738. The clock generator 1738 may generate clock pulses at a first, standard speed even though security-critical design elements may be configured to operate at a higher speed to enable them to operate with increased timing slack S' 134.

Although certain examples of memories and other components are depicted in FIG. 17 or described herein, a given implementation may include more, fewer, and/or different instances of processors, controllers, memories, modules, or peripheral devices, including duplicates thereof.

Example implementations of the illustrated components are described below. The one or more processors 1702 may be realized as a "main," "central," or "core" processor. The one or more processors 1702 may, by way of example only, be implemented with a 32-bit, in-order reduced instruction set computing (RISC) core with a multi-stage pipeline. With, e.g., a RISC-V functionality, the processor may implement an M (machine) and a U (user) mode. Activating a reset pin (not shown) (e.g., through de-assertion of an active-low reset pin) causes the one or more processors 1702 to exit reset and begin executing code at its reset vector. The reset vector may begin in the ROM 1706, which validates code in an embedded flash (e flash, not shown) before jumping to it. In other words, the code is expected to have been instantiated into the e flash before the reset is released. A reset may be generated by the alert handler 1718 as a security countermeasure; by a watchdog timer; and so forth. Reset signals may also be sent to other circuit components, such as one of the memories or one of the other components of the system 1700. Although not shown, the one or more processors 1702 also may be coupled to a debug module and an interrupt controller. The debug module may provide debug-access to the processors 1702. Logic in the debug module may allow the one or more processors 1702 to enter a debug mode and provide an ability to inject code into the device (e.g., by emulating an instruction) or into a memory. The interrupt controller may accept a vector of interrupt sources and be configured to also assign leveling and priority to the interrupts before forwarding them to the one or more processors 1702 for handling.

The one or more processors 1702 can provide any desired level of performance or include any internal circuit components. For example, each of the one or more processors 1702 can include at least one arithmetic logic unit (ALU) (e.g., including an "additional" ALU to calculate branch targets to remove a cycle of latency on taken conditional branches), a register file, a control unit, and input/output (I/O) units, and multiple pipeline stages. With multiple pipeline stages, a pipeline can perform register writeback to reduce a cycle of latency from loads and stores and prevent a pipeline stall where a response to a load or store is available the cycle after the request. The one or more processors 1702 can implement a single-cycle multiplier or produce an imprecise exception on an error response to a store, which allows the processor to continue executing past the store without waiting for the response. Although not depicted, the one or more processors 1702 generally may include an instruction cache to provide single-cycle access times for instructions.

### Example Testing System

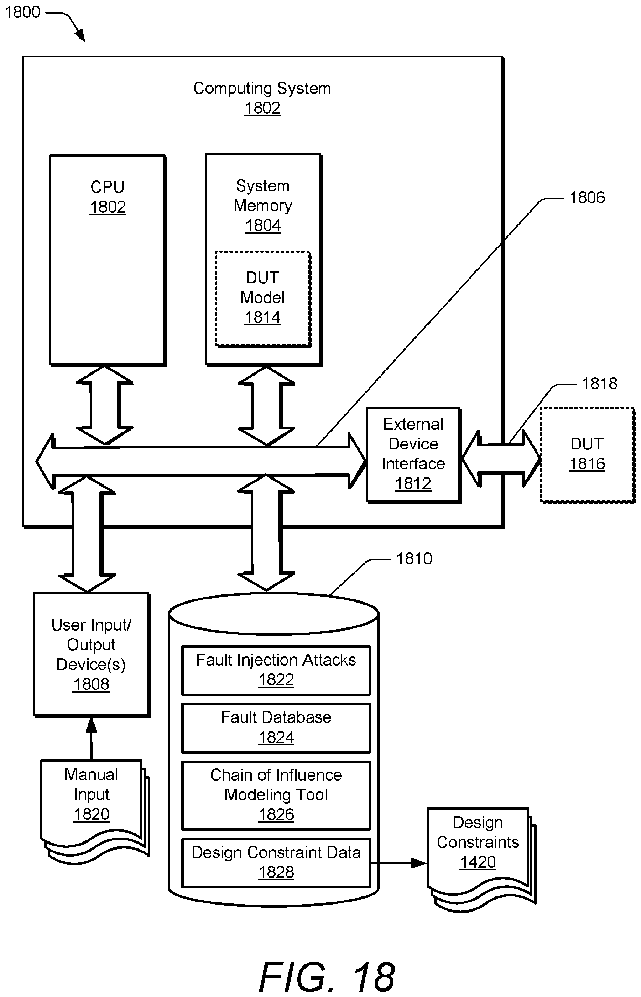

Referring to FIG. 18, a testing and design system 1800 uses a computing system to test a simulation or model of a device-under-test (DUT) to determine security-critical design elements, as previously described. The computing system includes a central processing unit (CPU) 1802 and a system memory 1804 that are coupled to each other and other devices via a system bus 1806. The system bus 1806 is also coupled to user input/output devices 1808, one or more storage devices 1810, and, in some implementations, an external device interface 1812. The DUT may be tested with a DUT model 1814 that is generated and tested in system memory. Alternatively, an actual model or sample DUT 1816 may be coupled to the external device interface 1812 by a suitable DUT interface 1818. Thus, a software DUT model 1814 or an actual DUT 1816 may be subjected to fault injection attacks to determine which of the design elements included in the DUT should be designated as security-critical design elements as previously described.

The testing may be controlled with manual input 1820 presented at the user input/output devices 1808. Users may use the user input/output devices 1808 to control or monitor automatic testing or the users may use the user input/output devices 1808 to launch fault injection attacks, make changes to the DUT model 1814, or perform other functions.

The storage devices 1810 may store fault injection attack data 1822 to apply known or hypothesized fault injection attacks to the DUT model 1814 or DUT 1816. Response of the DUT model 1814 or DUT 1816 may be logged in a fault database 1824, as described with reference to FIG. 15. A chain of influence modeling tool 1826 may be used to determine how inputs and outputs of design elements included in the DUT may affects others of the design elements to determine other device elements that should be determined to be security-critical design elements as previously described. Ultimately, results of the testing may generate design constraint data 1828 as to which of the design elements included in the DUT should be regarded as security-critical design elements, resulting in the design constraints 1520 (see FIG. 15) that are used to modify the design of the DUT to be resilient to fault injection attacks.

### Example Method of Operation Clocking Security-Critical Design Elements with Higher Timing Slack

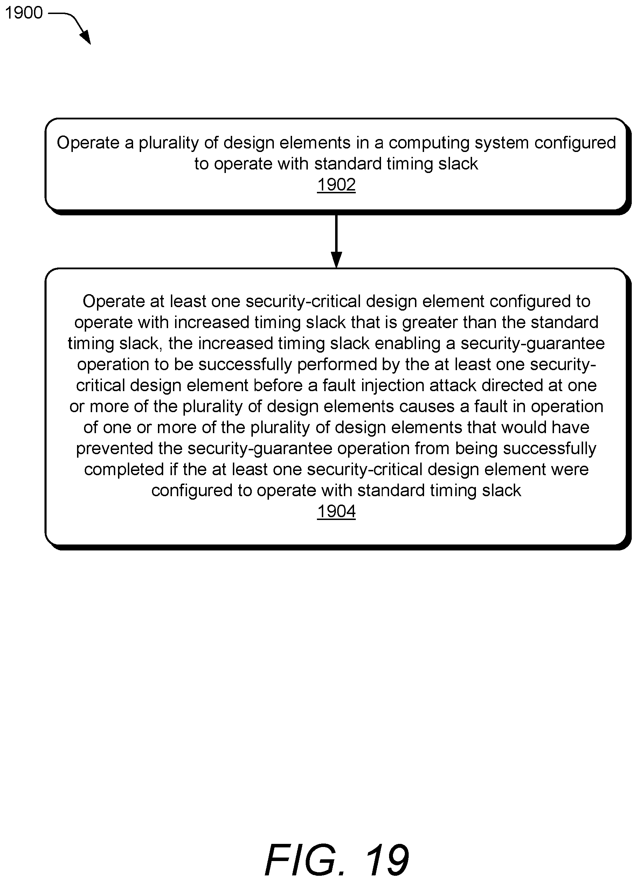

FIG. 19 illustrates an example method 1900 of operating a computing system with some of the design elements operating with increased timing slack to thwart fault injection attacks. At a block 1902, a plurality of design elements in a computing system are configured to operate with standard timing slack. At a block 1904, a security-critical design element (or a plurality of security critical design elements) are configured at least one security-critical design element configured to operate with increased timing slack that is greater than the standard timing slack, the increased timing slack enabling a security-guarantee operation to be successfully performed by the at least one security-critical design element before a fault injection attack directed at one or more of the plurality of design elements causes a fault in operation of one or more of the plurality of design elements that would have prevented the security-guarantee operation from being successfully completed if the at least one security-critical design element were configured to operate with standard timing slack. As previously described, with security-critical design elements operating with increased timing slack, security-guarantee operations such as secure boot flow may be performed before a fault injection attack "breaks" one or more of the plurality of design elements not designated as a security-critical design element, thereby preventing the fault injection attack from taking control of or otherwise disrupting operation of the computing system.

### Conclusion

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying Drawings and terms discussed herein may be indicative of one or more items or terms, and thus reference may be made interchangeably to single or plural forms of the items and terms in this written description.

Although aspects of the described systems and methods for implementing fault-resilient secure-by-design systems elements have been described in language specific to features and/or methods, the subject of the appended claims is, as recited by any of the previous examples not necessarily limited to the specific features or methods described. Rather, the specific features and methods are disclosed as example implementations of fault-resilient secure-by-design systems elements, and other equivalent features and methods are intended to be within the scope of the appended claims. Further, various aspects of fault-resilient secure-by-design systems elements are described, and it is to be appreciated that each described aspect can be implemented independently or in connection with one or more other described aspects.

## Claims

1. A method comprising:
operating a plurality of design elements in a computing system configured to operate with standard timing slack; and
operating at least one security-critical design element configured to operate with increased timing slack that is greater than the standard timing slack, the increased timing slack enabling a security-guarantee operation to be successfully performed by the at least one security-critical design element before a fault injection attack directed at one or more of the plurality of design elements causes a fault in operation of one or more of the plurality of design elements that would have prevented the security-guarantee operation from being successfully completed if the at least one security-critical design element were configured to operate with standard timing slack.

2. The method of claim 1, wherein the computing system is configured to be clocked by a clock generator operating at a standard clock speed and the at least one security-critical design element is configured to operate at an increased clock speed greater than the standard clock speed allowing the at least one security-critical design element to operate with the increased timing slack while being clocked by the clock generator at the standard clock speed.

3. The method of claim 2, further comprising:
applying a test fault injection attack to one or more selected design elements of the plurality of design elements configured to operate with standard timing slack; and
identifying at least one selected design element of the one or more of the plurality of design elements that is prevented from successfully performing a selected security-guarantee operation as a result of the test fault injection attack while being configured to operate with standard timing slack but is capable of successfully performing the selected security-guarantee operation at the increased timing slack.

4. The method of claim 3, further comprising designating as an additional security-critical design element to be operated with the increased timing slack at least one selected design element of the one or more of the plurality of design elements that is prevented from successfully performing the selected security-guarantee operation as a result of the test fault injection attack while being configured to operate with standard timing slack but is capable of successfully performing the selected security-guarantee operation at the increased timing slack.

5. The method of any of claims 3 or 4, further comprising identifying the at least one security-critical design element and determining a chain of influence of one or more additional design elements along with at least one selected design element that, in combination, are affected by the test fault injection attack.

6. The method of claim 5, further comprising identifying, as the at least one additional security-critical design element, a design element that at least one of:
prevents the security-critical element from performing the selected security-guarantee operations because of an effect of the test fault injection attack on the at least one additional design element; or
is prevented from successfully performing the selected security-guarantee operation because of an effect of the test fault injection attack on another of the plurality of design elements.

7. The method of claim 6, further comprising designating the at least one additional design element included in the chain of influence as one of a plurality of security-critical design elements to be configured to operate with the increased timing slack.

8. The method of any of claims 5-7, further comprising determining the chain of influence using a computer-executable modeling tool.

9. The method of any of claims 3-8, wherein the computing system includes at least one of a model of the computing system or a device-under-test implementation of the computing system.

10. The method of any of claims 3-8, wherein the applying of the fault injection attack to one or more design elements of the plurality of design elements further comprises a manual process or an automatic process.

11. The method of any of claims 3-8, wherein identifying an effect of the fault injection attack on any of the plurality of design elements comprises a manual process or an automatic process.

12. The method of any of claims 3-11, further comprising storing, in a database, information relating to one or more of the plurality of design elements that, as a result of the fault injection attack being applied, at least one of:
are prevented from successfully processing the selected security-guarantee operation; or
prevent another of the plurality of design elements from processing the selected security-guarantee operation.

13. The method of claim 12, further comprising extracting from the database the at least one security-critical design element that is configured to operate with the increased timing slack.

14. A program for causing a computer system to execute the method recited in any one of claims 1 through 13.

15. A computing system configured to operate according to the method recited in any one of claims 1 through 13.

## Patentansprüche

1. Verfahren, umfassend:
Betreiben einer Mehrzahl von Designelementen in einem Rechensystem, das konfiguriert ist, mit Standard-Timing-Slack zu arbeiten; und
Betreiben mindestens eines sicherheitskritischen Designelements, das konfiguriert ist, mit erhöhtem Timing-Slack zu arbeiten, der größer als der Standard-Timing-Slack ist, wobei der erhöhte Timing-Slack ermöglicht, dass eine Sicherheitsgarantie-Operation von dem mindestens einen sicherheitskritischen Designelement erfolgreich durchgeführt wird, bevor ein Fehlerinjektionsangriff, der auf eines oder mehrere der Mehrzahl von Designelementen gerichtet ist, einen Fehler im Betrieb von einem oder mehreren der Mehrzahl von Designelementen verursacht, der verhindert hätte, dass die Sicherheitsgarantie-Operation erfolgreich abgeschlossen wird, wenn das mindestens eine sicherheitskritische Designelement konfiguriert wäre, mit Standard-Timing-Slack zu arbeiten.

2. Verfahren nach Anspruch 1, wobei das Rechensystem konfiguriert ist, von einem Taktgenerator getaktet zu werden, der mit einer Standard-Taktgeschwindigkeit arbeitet, und das mindestens eine sicherheitskritische Designelement konfiguriert ist, mit einer erhöhten Taktgeschwindigkeit zu arbeiten, die größer als die Standard-Taktgeschwindigkeit ist, was dem mindestens einen sicherheitskritischen Designelement erlaubt, mit dem erhöhten Timing-Slack zu arbeiten, während es von dem Taktgenerator mit der Standard-Taktgeschwindigkeit getaktet wird.

3. Verfahren nach Anspruch 2, ferner umfassend:
Anwenden eines Test-Fehlerinjektionsangriffs auf ein oder mehrere ausgewählte Designelemente der Mehrzahl von Designelementen, die konfiguriert sind, mit Standard-Timing-Slack zu arbeiten; und
Identifizieren mindestens eines ausgewählten Designelements des einen oder der mehreren der Mehrzahl von Designelementen, das als ein Ergebnis des Test-Fehlerinjektionsangriffs daran gehindert wird, eine ausgewählte Sicherheitsgarantie-Operation erfolgreich durchzuführen, während es konfiguriert ist, mit Standard-Timing-Slack zu arbeiten, aber in der Lage ist, die ausgewählte Sicherheitsgarantie-Operation bei dem erhöhten Timing-Slack erfolgreich durchzuführen.

4. Verfahren nach Anspruch 3, ferner umfassend Ausweisen, als ein zusätzliches sicherheitskritisches Designelement, das mit dem erhöhten Timing-Slack betrieben werden soll, mindestens eines ausgewählten Designelements des einen oder der mehreren der Mehrzahl von Designelementen, das als ein Ergebnis des Test-Fehlerinjektionsangriffs daran gehindert wird, die ausgewählte Sicherheitsgarantie-Operation erfolgreich durchzuführen, während es konfiguriert ist, mit Standard-Timing-Slack zu arbeiten, aber in der Lage ist, die ausgewählte Sicherheitsgarantie-Operation bei dem erhöhten Timing-Slack erfolgreich durchzuführen.

5. Verfahren nach einem der Ansprüche 3 oder 4, ferner umfassend Identifizieren des mindestens einen sicherheitskritischen Designelements und Bestimmen einer Einflusskette eines oder mehrerer zusätzlicher Designelemente zusammen mit mindestens einem ausgewählten Designelement, die in Kombination von dem Test-Fehlerinjektionsangriff betroffen sind.

6. Verfahren nach Anspruch 5, ferner umfassend Identifizieren, als das mindestens eine zusätzliche sicherheitskritische Designelement, eines Designelements, das mindestens eines von:
das sicherheitskritische Element daran hindert, die ausgewählten Sicherheitsgarantie-Operationen wegen einer Auswirkung des Test-Fehlerinjektionsangriffs auf das mindestens eine zusätzliche Designelement durchzuführen; oder
daran gehindert wird, die ausgewählte Sicherheitsgarantie-Operation wegen einer Auswirkung des Test-Fehlerinjektionsangriffs auf ein anderes der Mehrzahl von Designelementen erfolgreich durchzuführen.

7. Verfahren nach Anspruch 6, ferner umfassend Ausweisen des mindestens einen in der Einflusskette eingeschlossenen zusätzlichen Designelements als eines einer Mehrzahl von sicherheitskritischen Designelementen, die konfiguriert werden sollen, mit dem erhöhten Timing-Slack zu arbeiten.

8. Verfahren nach einem der Ansprüche 5-7, ferner umfassend Bestimmen der Einflusskette unter Verwendung eines computerausführbaren Modellierungswerkzeugs.

9. Verfahren nach einem der Ansprüche 3-8, wobei das Rechensystem mindestens eines von einem Modell des Rechensystems oder einer Device-Under-Test-Implementierung des Rechensystems einschließt.

10. Verfahren nach einem der Ansprüche 3-8, wobei Anwenden des Fehlerinjektionsangriffs auf ein oder mehrere Designelemente der Mehrzahl von Designelementen ferner einen manuellen Prozess oder einen automatischen Prozess umfasst.

11. Verfahren nach einem der Ansprüche 3-8, wobei Identifizieren einer Auswirkung des Fehlerinjektionsangriffs auf irgendeines der Mehrzahl von Designelementen einen manuellen Prozess oder einen automatischen Prozess umfasst.

12. Verfahren nach einem der Ansprüche 3-11, ferner umfassend Speichern, in einer Datenbank, von Informationen in Bezug auf eines oder mehrere der Mehrzahl von Designelementen, die als ein Ergebnis dessen, dass der Fehlerinjektionsangriff angewendet wird, mindestens eines von:
daran gehindert werden, die ausgewählte Sicherheitsgarantie-Operation erfolgreich zu verarbeiten; oder
ein anderes der Mehrzahl von Designelementen daran hindern, die ausgewählte Sicherheitsgarantie-Operation zu verarbeiten.

13. Verfahren nach Anspruch 12, ferner umfassend Extrahieren, aus der Datenbank, des mindestens einen sicherheitskritischen Designelements, das konfiguriert ist, mit dem erhöhten Timing-Slack zu arbeiten.

14. Programm zum Veranlassen eines Computersystems, das in einem der Ansprüche 1 bis 13 genannte Verfahren auszuführen.

15. Rechensystem, das konfiguriert ist, gemäß dem in einem der Ansprüche 1 bis 13 genannten Verfahren zu arbeiten.

## Revendications

1. Procédé comprenant :
le fonctionnement d'une pluralité d'éléments de conception dans un système informatique configuré pour fonctionner avec une marge de temporisation standard ; et
le fonctionnement d'au moins un élément de conception critique pour la sécurité configuré pour fonctionner avec une marge de temporisation accrue qui est supérieure à la marge de temporisation standard, la marge de temporisation accrue permettant à l'au moins un élément de conception critique pour la sécurité de réaliser avec succès une opération de garantie de sécurité avant qu'une attaque par injection de fautes dirigée contre un ou plusieurs de la pluralité d'éléments de conception ne provoque une défaillance dans le fonctionnement d'un ou de plusieurs de la pluralité d'éléments de conception qui aurait empêché l'opération de garantie de sécurité d'être réalisée avec succès si l'au moins un élément de conception critique pour la sécurité était configuré pour fonctionner avec une marge de temporisation standard.

2. Procédé selon la revendication 1, dans lequel le système informatique est configuré pour être cadencé par un générateur d'horloge fonctionnant à une fréquence d'horloge standard et l'au moins un élément de conception critique pour la sécurité est configuré pour fonctionner à une fréquence d'horloge accrue supérieure à la fréquence d'horloge standard permettant à l'au moins un élément de conception critique pour la sécurité de fonctionner avec la marge de temporisation accrue tout en étant cadencé par le générateur d'horloge à la fréquence d'horloge standard.

3. Procédé selon la revendication 2, comprenant en outre :
l'application d'une attaque par injection de fautes de test à un ou plusieurs éléments de conception sélectionnés de la pluralité d'éléments de conception configurés pour fonctionner avec une marge de temporisation standard ; et
l'identification d'au moins un élément de conception sélectionné des un ou plusieurs de la pluralité d'éléments de conception qui est empêché de réaliser avec succès une opération de garantie de sécurité sélectionnée à la suite de l'attaque par injection de fautes de test tout en étant configuré pour fonctionner avec une marge de temporisation standard, mais qui est capable de réaliser avec succès l'opération de garantie de sécurité sélectionnée avec la marge de temporisation accrue.

4. Procédé selon la revendication 3, comprenant en outre la désignation, comme un élément de conception critique pour la sécurité supplémentaire à faire fonctionner avec la marge de temporisation accrue, d'au moins un élément de conception sélectionné des un ou plusieurs de la pluralité d'éléments de conception qui est empêché de réaliser avec succès l'opération de garantie de sécurité sélectionnée à la suite de l'attaque par injection de fautes de test tout en étant configuré pour fonctionner avec une marge de temporisation standard, mais qui est capable de réaliser avec succès l'opération de garantie de sécurité sélectionnée avec la marge de temporisation accrue.

5. Procédé selon l'une quelconque des revendications 3 ou 4, comprenant en outre l'identification de l'au moins un élément de conception critique pour la sécurité et la détermination d'une chaîne d'influence d'un ou de plusieurs éléments de conception supplémentaires le long d'au moins un élément de conception sélectionné qui, en combinaison, sont affectés par l'attaque par injection de fautes de test.

6. Procédé selon la revendication 5, comprenant en outre l'identification, comme l'au moins un élément de conception critique pour la sécurité supplémentaire, d'un élément de conception qui remplit au moins l'une des conditions suivantes :
empêche l'élément critique pour la sécurité de réaliser les opérations de garantie de sécurité sélectionnées en raison d'un effet de l'attaque par injection de fautes de test sur l'au moins un élément de conception supplémentaire ; ou
est empêché de réaliser avec succès l'opération de garantie de sécurité sélectionnée en raison d'un effet de l'attaque par injection de fautes de test sur un autre de la pluralité d'éléments de conception.

7. Procédé selon la revendication 6, comprenant en outre la désignation de l'au moins un élément de conception supplémentaire inclus dans la chaîne d'influence comme l'un d'une pluralité d'éléments de conception critiques pour la sécurité à configurer pour fonctionner avec la marge de temporisation accrue.

8. Procédé selon l'une quelconque des revendications 5 à 7, comprenant en outre la détermination de la chaîne d'influence à l'aide d'un outil de modélisation exécutable par ordinateur.

9. Procédé selon l'une quelconque des revendications 3 à 8, dans lequel le système informatique comporte au moins l'un d'un modèle du système informatique ou d'une implémentation du système informatique sur un dispositif testé.

10. Procédé selon l'une quelconque des revendications 3 à 8, dans lequel l'application de l'attaque par injection de fautes à un ou plusieurs éléments de conception de la pluralité d'éléments de conception comprend en outre un processus manuel ou un processus automatique.

11. Procédé selon l'une quelconque des revendications 3 à 8, dans lequel l'identification d'un effet de l'attaque par injection de fautes sur l'un quelconque de la pluralité d'éléments de conception comprend un processus manuel ou un processus automatique.

12. Procédé selon l'une quelconque des revendications 3 à 11, comprenant en outre le stockage, dans une base de données, d'informations relatives à un ou plusieurs de la pluralité d'éléments de conception qui, à la suite de l'application de l'attaque par injection de fautes, remplissent au moins l'une des conditions suivantes :
sont empêchés de traiter avec succès l'opération de garantie de sécurité sélectionnée ; ou
empêchent un autre de la pluralité d'éléments de conception de traiter l'opération de garantie de sécurité sélectionnée.

13. Procédé selon la revendication 12, comprenant en outre l'extraction de la base de données de l'au moins un élément de conception critique pour la sécurité qui est configuré pour fonctionner avec la marge de temporisation accrue.

14. Programme destiné à amener un système informatique à exécuter le procédé selon l'une quelconque des revendications 1 à 13.

15. Système informatique configuré pour fonctionner selon le procédé selon l'une quelconque des revendications 1 à 13.
